# EUROPEAN PATENT SPECIFICATION

(11) **EP 2 040 334 B1**
(45) Date of publication and mention of the grant of the patent: **26.03.2014**
(21) Application number: 06843455.4
(22) Date of filing: 27.12.2006
(51) Int. Cl.: H01Q 7/08, G06K 19/077, H01Q 1/24, H01Q 1/52, H01Q 7/06, H01Q 1/22

(54) **ANTENNA DEVICE**
ANTENNENEINRICHTUNG
DISPOSITIF D'ANTENNE

(30) Priority: 07.07.2006 JP 2006187486; 01.09.2006 JP 2006237272
(43) Date of publication of application: 25.03.2009
(73) Proprietor: Murata Manufacturing Co. Ltd., Nagaokakyo-shi, Kyoto 617-8555 (JP)
(72) Inventor: ITO, Hiromitsu, Nagaokakyo-shi, Kyoto 617-8555 (JP); KUBO, Hiroyuki, Nagaokakyo-shi, Kyoto 617-8555 (JP); YOSUI, Kuniaki, Nagaokakyo-shi, Kyoto 617-8555 (JP)
(74) Representative: Schenk, Markus
(86) International application number: PCT/JP2006/326073
(87) International publication number: WO 2008/004325

(56) References cited:
- EP-A1- 0 590 589
- EP-A1- 2 009 518
- JP-A- 1 013 710
- JP-A- 11 122 146
- JP-A- 2001 034 726
- JP-A- 2002 207 981
- JP-A- 2003 318 634
- JP-A- 2004 134 957
- JP-A- 2004 153 463
- JP-A- 2004 166 175
- JP-A- 2005 210 223
- JP-A- 2005 277 524
- JP-A- 2005 333 244
- JP-A- 2006 050 522
- US-A1- 2005 270 249

## Description

### Technical Field

The present invention relates to antenna devices that can be utilized as antennas included in mobile electronic devices.

### Background Art

As shown in, for example, Patent Document 1 and Patent Document 2, antenna coils are mounted in casings of mobile electronic devices, such as mobile phone terminals, that are equipped with RFID (Radio Frequency Identification) radio tags communicating with external devices via electromagnetic signals.

According to Patent Document 1, data carrier signals from the outside are received by an antenna coil mounted on a substrate included in a mobile phone terminal so as to transmit and receive data in a contactless manner to and from a reader/writer. The antenna coil of this Patent Document 1 is a general planer coil adhered onto a planar magnetic core. The antenna coil is mounted so that the axial direction of the antenna coil is vertical to the mounting substrate, that is, the axial direction is vertical to a plane of the casing of the mobile phone terminal.

An antenna coil according to Patent Document 2 is used as an antenna for radio-controlled clocks and RFID systems, and is disposed inside a casing. A coil of this antenna coil is wounded around a magnetic core made of a magnetic body. Ends of the magnetic core of the antenna coil are bent in a direction away from the adjacent casing or a metal part of the adjacent casing. Such a configuration allows many magnetic fluxes coming into casing to converge, which can make the antenna highly sensible.
Patent Document 1: Japanese Unexamined Patent Application Publication No. 2004-153463
Patent Document 2: Japanese Unexamined Patent Application Publication No. 2006-050522

### Disclosure of Invention

### Problems to be Solved by the Invention

Systems for examining tickets by prompting users to place RFID-equipped mobile phone terminals having the aforementioned antenna coils, instead of commuter passes, over automated ticket gates and exchanging user information have been suggested. Generally, users horizontally place a principal surface of mobile phone terminals over a detecting surface of a reader/writer. In this case, most of magnetic fluxes radiated from the reader/writer vertically come into the principal surface of the mobile phone terminals. A liquid crystal display panel, a keyboard, an RF circuit substrate, and a battery are included in a casing of mobile phone terminals. Since these generally have a planar ground electrode, the magnetic fluxes that are vertical to the principal surface of the mobile phone terminals cannot penetrate the mobile phone terminals.

An antenna coil described in Patent Document 1 is mounted so that the coil axis is vertical to a principal surface of a circuit substrate. Accordingly, when the aforementioned communication configuration is employed, the magnetic fluxes coming into the casing of the mobile phone terminals go through the coil axis of the antenna coil, which thus can induce the current in the antenna coil. However, since a lateral area of the magnetic core is small in Patent Document 1, the radiation efficiency of the magnetic fluxes having gone through the antenna coil is low. Accordingly, it is difficult for the magnetic fluxes to go into the mobile phone terminals and the current caused in the antenna coil is significantly weak, due to which, there is a problem that the optimum antenna sensitivity cannot be realized.

On the other hand, an antenna coil described in Patent Document 2 is devised so that the coil axis is horizontal to a principal surface of a circuit substrate. Since a coil is wounded around a central portion of a magnetic core in the antenna coil described in Patent Document 2, magnetic fluxes can come into bent ends not having the winding coil. When users place mobile phone terminals over a reader/writer of automated ticket gates, the users generally intend to place a central portion of the mobile phone terminals over the reader/writer. However, since the antenna coil described in Patent Document 2 is configured to catch the magnetic fluxes at the ends thereof, the current induced in the antenna coil by the incoming magnetic fluxes is weak when the central portion is placed over the reader/writer. That is, the possibility of successful communication with automated ticket gates serving as readers/writers becomes very low. When the communication with the automated ticket gates is not performed successfully, the automated ticket gates block users of the mobile phone terminals from entering. Since the number of people passing through the automated ticket gates per unit of time during rush hours in metropolitan areas is extremely large, it can be considered that major disruptions may occur when the automated ticket gate systems frequently block the human flow due to a communication failure.

To improve communication performance of such antenna coils, the antenna coil described in Patent Document 2 may be mounted so that the coil axis is vertical to the principal surface of the mobile phone terminal. However, such a mounting method causes a problem of an increase in thickness of a casing. Even if the antenna coil can be disposed in this manner, the aforementioned ground electrode exists at the central portion of the mobile phone terminals. Thus, to avoid the influence thereof, the antenna coil has to be disposed at a corner portion of the mobile phone terminals. As mentioned before, when users place mobile phone terminals over a reader/writer of automated thicket gates, the users intend to place the central portion of the mobile phone terminals over the reader/writer. The possibility that the coil axis of the antenna coil of the mobile phone terminals is shifted from an area of the reader/writer that allows the most efficient communication becomes greater, and there is a problem that it is difficult to maintain an optimum communication state.

JP 2005333244 A discloses a mobile telephone set capable of sending and receiving various data to and from external equipment, such as a reader/writer, without contacting on either of the front and reverse sides. The mobile telephone set is equipped with a main antenna for communication which is connected to a wireless part in an enclosure to communicate by radio waves and a looped electromagnetic antenna which is connected to an IC module in the enclosure to send and receive data to and from the external equipment without contacting through electromagnetic induction, the looped electromagnetic antenna being arranged on the reverse surface and flank of the enclosure where a battery cover is provided.

JP 2004134957 A discloses an antenna with a metallic winding which is wound around the peripheral surface of a ferrite core while the winding being exposed and has an insulation coating on its surface, and printed board connection terminals to which soldering pads of the printed board are connected via cream solders and connection terminals are connected. A shielding body for preventing the cream solders from flowing into the winding is formed between the terminals and the winding. With this constitution, since the cream solders can be prevented from flowing into the winding side by the shielding body provided between the terminals and the windings, short circuit hardly occurs between the windings or between the winding and the terminals or board pads due to the cream solders.

JP 2002207981 A discloses an antenna coil wound around a core part of a magnetic core. The core part is cylindrical formed, and in the core part, a recessed part for housing a control circuit is formed at a bottom face part, and a flange part and an erecting part are provided. A slit is formed so as to notch the flange part radially from the center of the core part so as not to prevent a magnetic flux. The control circuit, while being connected to the antenna coil, can be easily attached to the recessed part through the slit. The magnetic core is housed in a plastic case and sealed with resin.; The magnetic flux from the coil of a reader/writer is efficiently led to the antenna coil by the magnetic core, and the ID tag can be made to be thin and small.

EP 2009518 A1 forms prior art according to EPC article 54(3) and discloses an antenna constituted by a columnar magnetic core formed by a ferromagnetic body, a coil portion wound around the magnetic core, a flat-plate state extension portion extended from an end portion of the magnetic core, and a standing portion provided at least on a one-direction face of the extension portion.

The present invention is made in view of the above-described problems. It is an object of the present invention to provide antenna devices that can be surface-mounted on a circuit substrate of a mobile phone terminal or can be mounted inside a casing, that can decrease the thickness, and that can achieve favorable communication with a reader/writer.

### Means for Solving the Problems

To solve the above-described problems, the present invention provides for an antenna device according to claims 1 and 2.

### Advantages

According to this embodiment, antenna devices that can be surface-mounted on a circuit substrate of a mobile phone terminal or mounted inside a casing, and that can decrease the thickness can be obtained. In addition, since the magnetic reluctance at an end of an antenna coil becomes small, magnetic fluxes coming into the antenna coil can pass through a magnetic core more easily. This improves the sensitivity of the antenna, and antenna devices that achieve favorable communication with a reader/writer can be obtained.

### Brief Description of Drawings

[Fig. 1] Fig. 1 is a perspective view of an antenna device describing a first embodiment of the present invention.
[Fig. 2] Fig. 2 is a conceptual sectional view describing a principle of an operation of a first embodiment of the present invention.
[Fig. 3] Fig. 3 is a perspective view of an antenna device describing a second embodiment of the present invention.
[Fig. 4] Fig. 4 is a perspective view of an antenna device describing a third embodiment of the present invention.
[Fig. 5] Fig. 5 is a perspective view of an antenna device describing a fourth embodiment of the present invention.
[Fig. 6] Fig. 6 is a perspective view of an antenna device describing a fifth embodiment of the present invention.
[Fig. 7] Fig. 7 is a perspective view of an antenna device describing a sixth embodiment of the present invention.
[Fig. 8] Fig. 8 is a perspective view of an antenna device describing a seventh embodiment of the present invention.
[Fig. 9] Fig. 9 is a sectional view of an antenna device describing an eighth embodiment of the present invention.
[Fig. 10] Fig. 10 is a perspective view of an antenna device describing a ninth embodiment of the present invention.
[Fig. 11] Fig. 11 is a plan view of a flexible substrate according to a ninth embodiment of the present invention.
[Fig. 12] Fig. 12 is a perspective view of an antenna device describing a tenth embodiment of the present invention.
[Fig. 13] Fig. 13 is a plan view of a flexible substrate according to a tenth embodiment of the present invention.

### Reference Numerals

1 circuit substrate
2, 40, 41, 60 magnetic core
4, 5 coil conductor
6 connecting conductor
7, 8 terminal
9, 10 end face
30, 31, 32 conductor pattern

### Best Modes for Carrying Out the Invention

Embodiments of the present invention will be described below using the drawings.

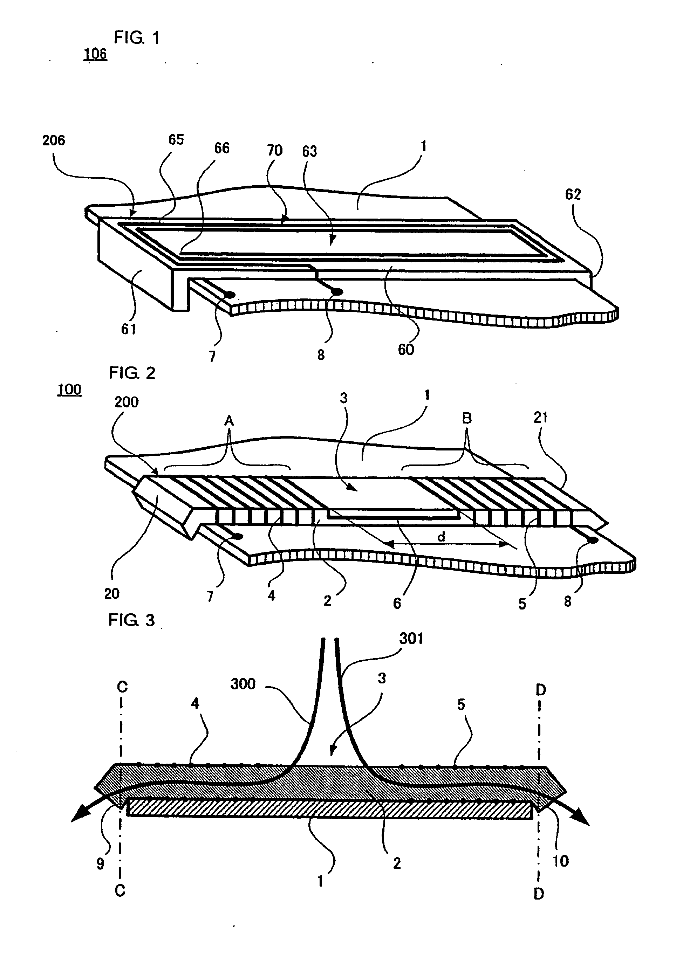

A first embodiment will be described using Fig. 1. Fig. 1 is a perspective view of an antenna device 106 that is a first embodiment of the present invention.

An antenna coil 206 is adhered closely onto a principal surface of a circuit substrate 1. The antenna coil 206 can be readily adhered onto the circuit substrate 1 using an adhesive or a double-sided adhesive tape. The circuit substrate 1 is a substrate arranged in a mobile phone terminal. An RF circuit and a control circuit, not shown, are formed on this substrate. The circuit substrate 1 is arranged in a casing to be in parallel to a principal surface of the mobile phone terminal. In addition, a ground electrode (not shown) is formed on an entire surface of the circuit substrate 1 that faces a surface on which the antenna coil 206 is mounted.

The antenna coil 206 is constituted by a magnetic core 60 and a coil 70. The magnetic core 60 has a first principal surface and a second principal surface. The first principal surface faces the second principle surface, while the second principal surface faces the circuit substrate. In addition, curved portions 61 and 62 that are along lateral faces of the circuit substrate 1 are formed at both ends of the magnetic core 60. That is, the magnetic core 60 curves or bends(simply described as "curves" hereafter) near the lateral faces of the circuit substrate 1. Since the magnetic core 60 curves so as to sandwich the circuit substrate 1, end faces of the magnetic core 60 are not on the circuit substrate 1. The end faces of the magnetic core mean faces facing a curving direction of the magnetic core and are located at leading ends of the magnetic core. In this embodiment, the end faces indicates faces of the curved portions 61 and 62 that are in parallel to the circuit substrate 1. The coil 70 is formed using a coil conductor 65 on the first principal surface of the magnetic core 60 that does not face the circuit substrate 1. The coil 70 describes a shape of a spiral on the surface, and the coil axis thereof is vertical to the first principal surface. An opening 63 not having the coil conductor 65 is disposed at the center of the coil 70. By disposing the opening 63, the coil conductor 65 does not prevent magnetic fluxes from going into the antenna coil 206, and the magnetic fluxes from the direction vertical to the first principal surface of the magnetic core 60 are allowed to go through. A through hole is disposed at a conductor end 66 of the coil 70. The conductor end 66 of the coil 70 is electrically connected to an electrode (not shown) disposed on a surface of the circuit substrate 1 that faces the antenna coil 206 by soldering, and is connected ultimately to a terminal 7. A conductor end on a side opposite to the side of the conductor end 66 of the coil 70 is connected to a terminal 8. The terminals 7 and 8 are pattern electrodes formed on the circuit substrate 1, and are connected to an RFID processing circuit, not shown, on the circuit substrate 1.

Magnetic fluxes coming from above the antenna device 106 go into the coil opening 63, and induce the current in the coil 70. By making the coil opening 63 larger, the incoming magnetic fluxes increase and the induced current becomes larger, which is thus preferable. The magnetic fluxes going into the magnetic core 60 cannot penetrate the circuit substrate 1 since a ground electrode is formed on the circuit substrate 1. The magnetic fluxes branches off in the magnetic core 60, and go outside mainly from the curved portions 61 and 62. Since the magnetic core 60 has the curved portions 61 and 62 at the both ends thereof, a section vertical to each principal surface becomes larger at the ends of the magnetic core 60. Accordingly, the magnetic reluctance at the ends of the magnetic core 60 decreases and the magnetic fluxes can pass through the magnetic core 60 more easily. In addition, since the end faces of the curved portions 61 and 62 are not on the circuit substrate 1 and are located outside of the circuit substrate 1 in plan view, the magnetic fluxes are radiated from the entire surface of the curved portions including the end faces. Accordingly, a structure offers the significantly high radiation efficiency of the magnetic fluxes and allows the magnetic fluxes to pass through the magnetic core 60 more easily. Since the coil 70 is formed in a shape of a spiral on the first principal surface of the magnetic core 60 in this embodiment, it is possible to make the magnetic core 60 thinner when it is compared with the following embodiments.

A second embodiment will be described next using Fig. 2. Fig. 2 is a perspective view of an antenna device 100 that is a second embodiment of the present invention. The same numerals are applied to the same portions as those of Fig. 1, and the description thereof is omitted.

An antenna coil 200 is adhered closely onto a circuit substrate 1. A magnetic core 2 is used in the antenna coil 200. Both ends of the magnetic core 2 curve near lateral faces of the circuit substrate 1 so as to form curved portions 20 and 21 that extend in a direction along the lateral faces of the circuit substrate 1. A coil conductor 4 and a coil conductor 5 are wounded around the magnetic core 2, thereby forming a coil portion A and a coil portion B at a portion of the magnetic core 2 excluding the curved portions 20 and 21. The coil portion A and the coil portion B constitute a pair of coils. The curved portions 20 and 21 are formed in a direction of coil axes of the coil portion A and the coil portion B. In addition, the coil axes of the coil portion A and the coil portion B are parallel to a mounting surface of the circuit substrate 1, and are common. Although only eight turns of winding are shown in each coil portion for convenience of description, the number of turns is not limited to this. The coil portion A and the coil portion B are formed apart from one another by a predetermined interval d, and a non-coil portion 3 is formed therebetween. The non-coil portion 3 allows magnetic fluxes to go into the magnetic core 2. The right end of the coil portion A and the left end of the coil portion B are connected serially by a connecting conductor 6 to form a pair of coils. The coil conductors 4 and 5 and the connecting conductor 6 constituting this one pair of coils are formed by one cupper wire. The cupper wire is wound around the magnetic core 2, whereby the coil portion A and the coil portion B are formed. Since winding directions around the coil axes of the coil portion A and the coil option B are opposite, the coil does not induce the current in response to magnetic fluxes that penetrate the magnetic core along the both coil axes. A terminal 7 is connected to a starting end (a terminating end) of the coil portion A, whereas a terminal 8 is connected to a terminating end (a starting end) of the coil portion B. The terminals 7 and 8 and the ends of the coils can be electrically connected by soldering. The terminals 7 and 8 are pattern electrodes formed on the circuit substrate 1, are connected to an RFID processing circuit, not shown, on the circuit substrate 1.

Fig. 3 is a conceptual sectional view along the coil axis of the antenna device 100 shown in Fig. 2. Since Fig. 3 is a conceptual sectional view, the size of Fig. 2 is shown exaggeratedly. In Fig. 3, the same numerals are applied to the same portions as those of Fig. 2, and the description thereof is omitted.

Magnetic fluxes 300 and 301 coming from above the antenna device 100, i.e., from a principal surface of a mobile phone terminal cannot penetrate the circuit substrate 1 since a ground electrode is disposed on the circuit substrate 1. The magnetic fluxes 300 and 301 go into the magnetic core 2 from the non-coil portion 3 disposed between the coil portion A and the coil portion B of the antenna coil 200, and pass through the magnetic core 2 along the coil axis, and go out from end faces 9 and 10. In this embodiment, the end faces 9 and 10 mean faces facing a curving direction of the magnetic core 2 and are located at leading ends of the magnetic core 2. Since outer sides of the coil portion A and the coil portion B of the magnetic core 2 are bent toward the side of the circuit substrate 1, a CC-cross section and a DD-cross section become larger, due to which, the magnetic reluctance at around the exits of magnetic fluxes reduces and the magnetic fluxes can pass through the magnetic core 2 more easily. Similar advantages can be obtained when the magnetic core is bent toward a side opposite to the circuit substrate 1. When the magnetic core is bent toward the side of the circuit substrate 1, components of the magnetic fluxes 300 and 301 that are bent toward the side of the circuit substrate 1 are caused as shown in the drawing. Paths of the magnetic fluxes bent toward the side of the circuit substrate 1 is along an original path of the magnetic fluxes and the magnetic fluxes can pass through the magnetic core 2 more easily, which is thus more preferable. Although the curved portions 20 and 21 are disposed at the both ends of the magnetic core 2 of the antenna device 100, the curved portions are not necessarily disposed at the both ends. In addition, one end of the magnetic core 2 may be bent toward the side of the circuit substrate 1, while the other end may be bent toward the side opposite to the side of the circuit substrate 1. However, disposing curved portions that curve toward the side of the circuit substrate 1 at the both sides is more effective, which is thus preferable.

Since winding directions of the coil portion A and the coil portion B are opposite, a direction of the current inducted by the magnetic flux 300 at the coil portion A and flowing around the coil axis is the same as a direction of the current induced by the magnetic flux 301 at the coil portion B and flowing around the coil axis. Since the coil portion A and the coil portion B are connected by the connecting conductor 6 so that the right end of the coil portion A and the left end of the coil portion B is connected as shown in Fig. 2, the current induced in the coil portion A and the current induced in the coil portion B are not cancelled. This allows a high-level signal to be extracted from the terminal 7 and the terminal 8.

Although a ground electrode is formed on a surface facing a surface of the circuit substrate 1 on which the magnetic core 2 is mounted in this embodiment, for example, a configuration in which a ground electrode is formed on a middle layer of a multilayer circuit substrate can offer an antenna device providing advantages similar to those of the above-described embodiments. In addition, the coil conductor 4 forming the coil portion A, the coil conductor 5 forming the coil portion B, and the connecting conductor 6 may be constituted by different copper wires, and may be electrically connected with each other by soldering. Furthermore, although the coil portion A and the coil portion B are serially connected in this embodiment, the coil portion A and the coil portion B may be connected in parallel.

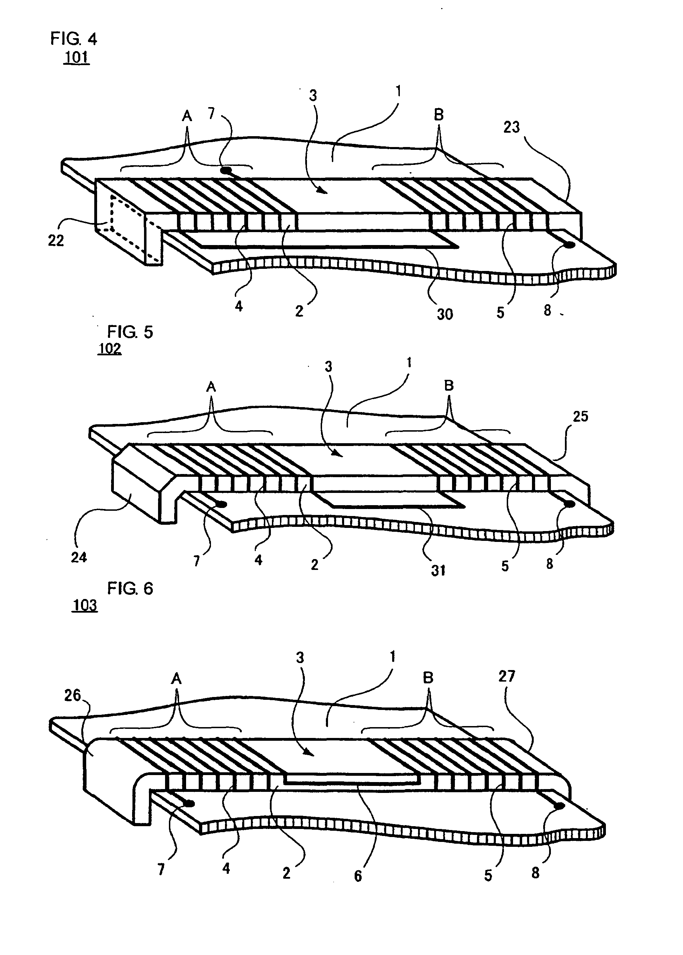

A third embodiment will be described next using Fig. 4. Fig. 4 is a perspective view of an antenna device 101 that is a third embodiment of the present invention. The same numerals are applied to the same portions as those of Fig. 2, and the description thereof is omitted.

A coil portion A and a coil portion B are connected by a conductor pattern 30 formed on a circuit substrate 1. The conductor pattern 30 can be formed on the circuit substrate 1 by pattern printing. An end of the coil portion A and an end of the conductor pattern 30, and an end of the coil portion B and the other end of the conductor pattern 30 are soldered. Here, an example in which a winding direction of the coil portion A around the coil axis and a wiring direction of the coil portion B around the coil axis are the same direction is shown. The left end of the coil portion A and the left end of the coil potion B is connected by the conductor pattern 30 as shown in Fig. 4 so that the current induced in the coil portion A and the current induced in the coil portion B by passing of magnetic fluxes as shown in Fig. 3 are not cancelled. In the third embodiment, as in the case of the second embodiment, the coil portion A and the coil portion B may be connected using a connecting conductor formed on a magnetic core 2. However, when such a configuration is employed, since the current possibly flows into positions other than the ends of the coil portions A and B due to crossing of the connecting conductor formed on the magnetic core 2 and the coil portions A and/or B, insulating layers have to be formed at the crossing portions.

The magnetic core 2 has curved portions 22 and 23 whose shapes differ from those of the antenna device 100. The curved portions 22 and 23 are formed along lateral faces of a circuit substrate 1. When the configuration of the antenna device 101 is employed, a CC-cross section and a DD-cross section corresponding to Fig. 3 further becomes larger, which further reduces the magnetic reluctance at the ends of the magnetic core 2, letting magnetic fluxes pass through more easily and increasing the sensitivity of the antenna. In addition, an effect of bending magnetic fluxes toward the side of the circuit substrate also increases, which is thus preferable.

A fourth embodiment will be described next using Fig. 5. Fig. 5 is a perspective view of an antenna device 102 that is a fourth embodiment of the present invention. The same numerals are applied to the same portions as those of Fig. 2, and the description thereof is omitted.

The right end of a coil portion A and the left end of a coil portion B are connected by a conductor pattern 31 formed on a circuit substrate 1. Here, as in the case of the second embodiment, a winding direction of the coil portion A around the coil axis and a winding direction of the coil portion B around the coil axis are opposite. Points different from the second embodiment are that the coil portion A and the coil potion B are connected using a conductor pattern 31 formed on the circuit substrate 1 but not using a conductor formed on a magnetic core 2 and that the magnetic core 2 has two-step curved portions 24 and 25 at both ends thereof. As mentioned here, the curved portion may have three or more steps. This can prevent a crack caused at the time of forming and burning of the magnetic core. Advantages regarding electric characteristics are substantially the same as those of the second embodiment.

A fifth embodiment will be described next using Fig. 6. Fig. 6 is a perspective view of an antenna device 103 that is a fifth embodiment of the present invention. The same numerals are applied to the same portions as those of Fig. 2, and the description thereof is omitted.

A configuration of a coil portion A, a coil portion B, and a connecting conductor 6 are the same as that of the second embodiment. Both ends of a magnetic core 2 curve without a sharp corner to form curved portions 26 and 27. The magnetic core having such a shape can be readily created by firstly pressing or molding a magnetic core into a plate shape in the course of forming of the magnetic core 2, and burning the magnetic core after performing the bending in an unsintered state. Since a die cost is cheaper than pressing complex shapes such as the third embodiment and the fourth embodiment, the magnetic core can be produced inexpensively. Advantages regarding electric characteristics are substantially the same as those of the second embodiment.

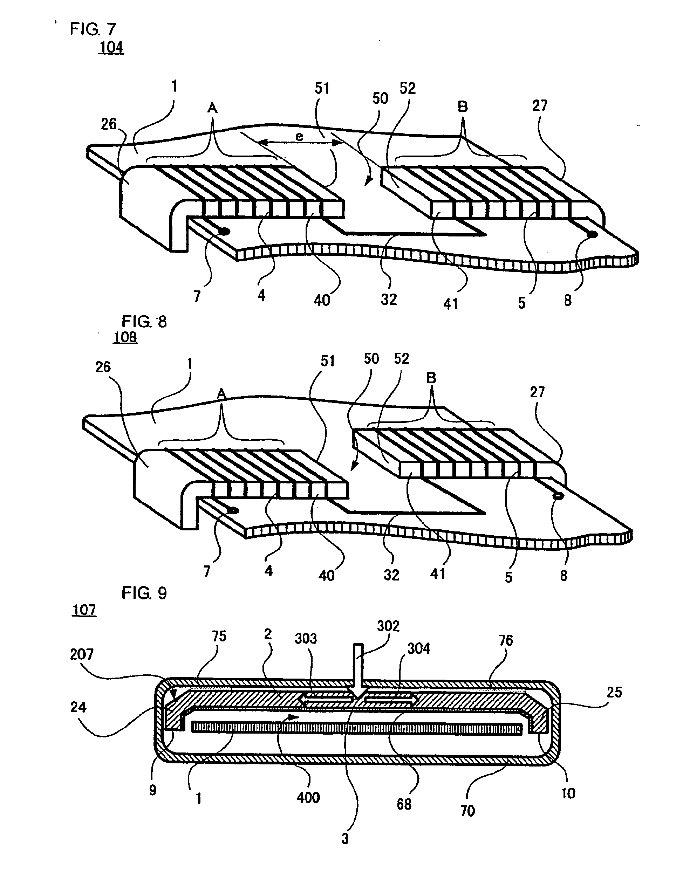

A sixth embodiment will be described next using Fig. 7. Fig. 7 is a perspective view of an antenna device 104 that is a sixth embodiment of the present invention. The same numerals are applied to the same portions as those of Fig. 6, and the description thereof is omitted.

The antenna device 104 has two divided magnetic cores 40 and 41. A coil portion A is formed on the magnetic core 40 using a coil conductor 4, while a coil portion B is formed on the magnetic core 41 using a coil conductor 5. The coil potions constitute a pair of coils. The magnetic cores 40 and 41 are mounted on a circuit substrate apart from each other by a predetermined interval e so that coil axes of the coil portion A and the coil portion B are common. The right end of the coil portion A and the left end of the coil portion B are connected by a conductor pattern 32 formed on the circuit substrate. The configuration other than the division of the magnetic cores and the connection of the coil portion A and the coil portion B by the conductor pattern 32 disposed on the circuit substrate is the same as that of the fifth embodiment. Such a configuration allows the magnetic core 40 having the coil portion A formed thereon and the magnetic core 41 having the coil portion B formed thereon are exactly the same components. Since the configuration of each coil is simple, this configuration has an advantage in mass production and the antenna device can be produced inexpensively.

Since magnetic fluxes reaching a circuit substrate 1 substantially vertically from above the circuit substrate 1 cannot penetrate a ground electrode disposed on the circuit substrate 1, the magnetic fluxes are bent in a direction along a surface of the circuit substrate 1 at a non-coil portion 50. The bent magnetic fluxes go into the magnetic cores from ends 51 and 52 of the magnetic cores on the circuit substrate 1, and induce the current in the coil portion A and the coil portion B. A conceptual diagram of magnetic fluxes passing through the antenna device 104 is substantially the same as that shown in Fig. 3.

A seventh embodiment will be described next using Fig. 8. Fig. 8 is a perspective view of an antenna device 108 that is a seventh embodiment of the present invention. The same numerals are applied to the same portions as those of Fig. 7, and the description thereof is omitted.

A method for forming magnetic cores 40 and 41 and coil portions A and B are the same as that of the sixth embodiment. A point different from the sixth embodiment is that coil axes of the coil portion A and the coil portions B differ. The magnetic core 40 and the magnetic core 41 are arranged on a circuit substrate 1 so that a coil cross section of the coil A and a coil cross section of the coil B projected onto a given plane vertical to the coil axes have an overlapping portion and a non-overlapping portion. By shifting arrangement positions of the magnetic core 40 and the magnetic core 41, the coil axes of the coil portion A and the coil portion B are also shifted. Such an arrangement method allows fine adjustment of mounting positions of the separate magnetic cores 40 and 41, thus increasing the flexibility in design of circuit substrates.

In addition, the antenna device 108 according to this embodiment hardly has deterioration of communication distance when it is compared with the antenna device according to the sixth embodiment. This is because magnetic fluxes, among magnetic fluxes going between the magnetic core 40 and the magnetic core 41, that are not led into the coil portion A and the coil portion B are extremely few since the magnetic cores are mounted on the circuit substrate 1 so that the coil cross section of the coil portion A and the coil cross section of the coil portion B projected onto the given plane vertical to the coil axes have an overlapping portion and a non-overlapping portion when viewed from the coil axis direction.

Although the arrangement positions of the magnetic cores 40 and 41 are shifted in a direction orthogonal to the coil axis along the circuit substrate 1 in the above-described embodiment, the present invention is not limited to this embodiment. For example, a configuration of shifting the arrangement position of each magnetic core in a direction orthogonal to a principal surface of a circuit substrate so that distances between each magnetic core and the circuit substrate differ or a configuration of arranging each magnetic core in different direction so as to shift the coil axes is also possible.

An eighth embodiment will be described next as a different embodiment using Fig. 9. Fig. 9 is a sectional view along a coil axis of an antenna device 107 that is an eighth embodiment of the present invention. This embodiment shows a sectional view when a magnetic core 2 is not adhered close to a circuit substrate 1 in the antenna device 102 that is the fourth embodiment shown in Fig. 5. The same numerals are applied to the same portions as those of Fig. 5, and the description thereof is omitted. Although the coil portion A and the coil portion B are connected with the conductor pattern 31 disposed on the circuit substrate 1 in the fourth embodiment, a coil portion A and a coil portion B are connected by a connecting conductor disposed on a lateral face of a magnetic core 2 in this embodiment as in the case of the fifth embodiment shown in Fig. 6. Additionally, illustration of sections of coil conductors 4 and 5 is omitted.

In this embodiment, the description is given on a diagram including a sectional diagram of a casing 70 of a mobile phone terminal. The casing 70 is formed by a resin or the like that passes magnetic fluxes. A magnetic core 2 is fixed to the casing 70 with fixing members 75 and 76. An adhesive or a double-sided adhesive tape is preferable as the fixing member. In addition, the magnetic core may be mechanically fixed to a suitable holder disposed on the casing 70. Preferably, a member that does not directly transmit an impact imposed on the casing 70 to the magnetic core 2 and that has the elasticity for absorbing the linear expansion of the casing 70 and the magnetic core 2 is used as the fixing member. When the magnetic core 2 is fixed to the casing 70 as described above, a gap 400 is caused between the circuit substrate 1 and the magnetic core 2. Although electronic components to be mounted on the circuit substrate 1, such as, for example, an IC, a capacitor, an inductor, and a filter, exist at the gap 400, the illustration thereof is omitted.

It is assumed that a reader/writer is placed at the upper side of this drawing. Magnetic fluxes 302 reaching from the upper side of the drawing penetrate the casing 70, and go into the magnetic core 2 from a non-coil portion 3 of the magnetic core 2. As described in Fig. 3, when the magnetic core 2 is adhered closely to the circuit substrate 1, magnetic fluxes are shielded by a ground surface disposed on the circuit substrate 1 and are led to the magnetic core 2, whereby the current is induced. When a gap 200 exists as in the case of this embodiment and the magnetic core 2 does not have an electrode for shielding magnetic fluxes, part of the magnetic fluxes 302 going into the magnetic core 2 goes through the magnetic core 2, reaches the ground surface of the circuit substrate 1, is shielded by the ground surface, and is led to the gap 400. In this embodiment, a shielding electrode 68 is disposed on an entire surface of the magnetic core 2 facing the circuit substrate 1. The shielding electrode 68 may be formed according to a method for affixing a plate of a conductive member to the magnetic core 2 or a method for coating a conductive paste onto the magnetic core 2, for example. The magnetic fluxes 302 cannot penetrate the magnetic core 2 due to the shielding electrode 68, and are divided into a magnetic flux 303 going to the left side of the magnetic core 2 in the drawing and a magnetic flux 304 going to the right side of the magnetic core 2 in the drawing. As described in Fig. 3, the magnetic flux 303 and the magnetic flux 304 induce the currents in the coil portion A and the coil portion B. Since the shielding electrode 68 has to be electrically insulated from the coil conductors 4 and 5, the shielding electrode 68 is disposed on the magnetic core 2 through an insulating layer formed by an insulating adhesive. It is preferable that the shielding electrode 68 is disposed on the magnetic core 2 through an insulating layer of low magnetic permeability even at the non-coil portion 3 not having the coil conductor 4 or 5 in order not to drop the Q value of the coil portions A and B functioning as an antenna. The shielding electrode 68 does not have to cover the entire surface of the magnetic core 2 that faces the circuit substrate 1. In addition, the shielding electrode 68 may be extended to a lateral face of the magnetic core 2 if necessary.

Although an example that end faces 9 and 10 not constituting the curve of the magnetic core 2 are arranged to be outside of a mounting surface of the circuit substrate 1 is shown in this embodiment, the end faces 9 and 10 may be arranged over the mounting surface of the circuit substrate 1. However, when the end faces 9 and 10 are not arranged over the mounting surface of the circuit substrate 1 and are located outside of the circuit substrate 1 in plan view, the magnetic fluxes 303 and 304 having induced the current in the coil portion A and the coil portion B are radiated to the outside from the surface of the curved portions 24 and 25 including the end faces 9 and 10. Accordingly, since an area from which the magnetic fluxes are radiated becomes larger and the radiation efficiency of the magnetic fluxes improves, it is more preferable to arrange the end faces 9 and 10 outside of the mounting surface.

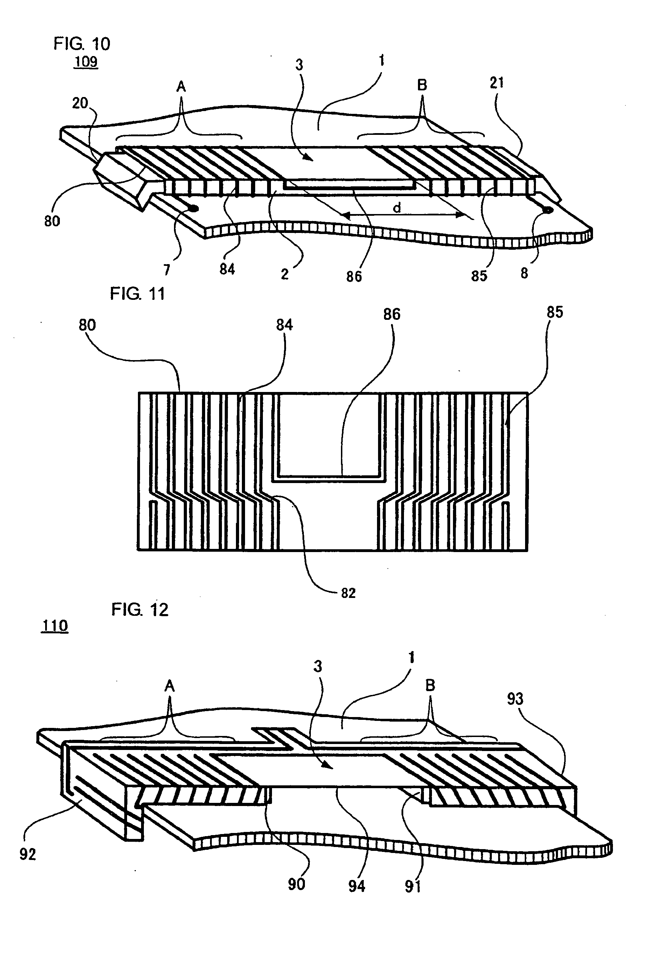

A ninth embodiment will be described next using Fig. 10 and Fig. 11. Fig. 10 is a perspective view of an antenna device 109 that is a ninth embodiment of the present invention. Fig. 11 is a plan view of a flexible substrate constituting the antenna device 109 that is the ninth embodiment of the present invention. In this embodiment, a coil conductor is formed on an insulating flexible substrate 80 formed by polyimide or the like, and the flexible substrate is wound around a magnetic core 2, whereby a coil is formed. A configuration excluding the coil forming method is the same as that of the second embodiment.

The flexible substrate 80 is wounded around a portion of the magnetic core 2 excluding curved portions 20 and 21 disposed at the ends thereof. As shown in Fig. 11, the flexible substrate 80 has a rectangular principal surface. Conductor patterns 84 constituting a coil portion A and conductor patterns 85 constituting a coil portion B are formed at both sides of the principal surface excluding the central portion so as to connect an upper end and a lower end of the flexible substrate 80. Each of the conductor patterns 84 and 85 has a bent portion 82 near the center thereof. In addition, two conductor patterns located at innermost positions on the principal surface of the flexible substrate 80 among the conductor patterns 84 and 85 formed on the both sides excluding the central portion are connected by a conductor pattern 86 constituting a connecting conductor. The conductor patterns 84, 85, and 96 can be formed by screen printing or etching, for example. The flexible substrate 80 formed in the above-described manner is wounded around the magnetic core 2 with the surface having the conductor patterns 84 and 85 being inside so that the upper ends and the lower ends of the conductor patterns 84 and 85 constituting the coil portion A and the coil portion B sequentially overlap. The overlapping points are electrically connected, for example, by soldering. In this manner, the conductor patterns 84 and 85 are formed as a series of coil as shown in Fig. 10. Although the conductor patterns 84, 85, 86 are shown as a single line in Fig. 10, the conductor patterns have a predetermined width as shown in Fig. 11. The flexible substrate 80 can be fixed around the magnetic core 2 by soldering or the like. By adhering the flexible substrate 80 onto the magnetic core 2 with an adhesive, stable production is possible. The flexible substrate 80 may be wound around the magnetic core 2 so that the surface having the conductor patterns 84 and 85 is located outside. However, when the surface having the conductor patterns 84 and 85 are located inside, the conductor patterns hardly peel off, which is thus more preferable.

Since formation of a coil according to such a method eliminates the necessity of printing conductors on a magnetic core, it is possible to form coil conductors inexpensively. In addition, when an electrode is formed directly on a magnetic core, there is a problem that the Q value of the coils functioning as an antenna decreases. When an insulating flexible substrate of low magnetic permeability is employed, the decrease in the Q value is improved, which is thus more preferable.

In addition, shapes of the conductor patterns 84, 85, and 86 formed on the flexible substrate 80 are not limited to the one described above.

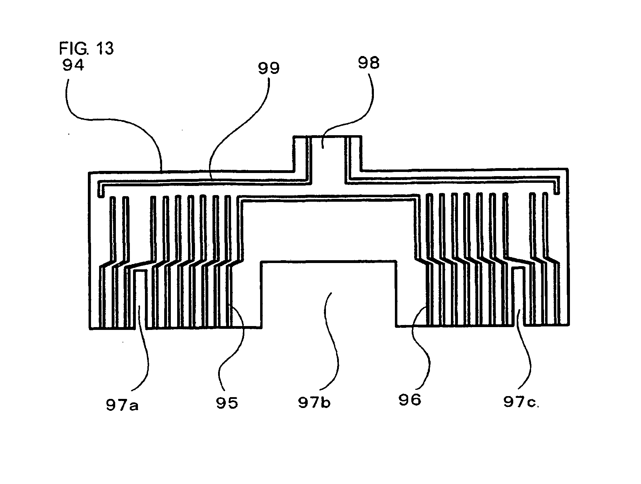

A tenth embodiment will be described next using Fig. 12 and Fig. 13. Fig. 12 is a perspective view of an antenna device 110 that is a tenth embodiment of the present invention. Fig. 13 is a plan view of a flexible substrate constituting the antenna device 110 that is the tenth embodiment of the present invention. As in the case of the ninth embodiment, a flexible substrate having coil conductors formed thereon is wound around a magnetic core, whereby a coil is formed in this embodiment. Points different from the ninth embodiment are that the flexible substrate is also wounded around curved portions to form coils and that the magnetic core is divided into two.

The antenna device 110 has two divided magnetic cores 90 and 91. Curved portions 92 and 93 are formed at the left end of the magnetic core 90 and the right end of the magnetic core 91. One flexible substrate 94 is wounded around the magnetic cores 90 and 91. The flexible substrate 94 also covers the curved portions 92 and 93.

As shown in Fig. 13, the flexible substrate 94 has three notches 97a, 97b, and 97c and one protrusion 98. Conductor patterns 95 constituting a coil A and conductor patterns 96 constituting a coil B are formed on both sides of a principal surface of the flexible substrate 94 excluding a central portion so as to be connected to a lower end of the flexible substrate 94 but not to be connected to an upper end thereof. The configuration of each conductor pattern is the same as that of the ninth embodiment. A conductor pattern 99 for connecting to a terminal (not shown) is disposed near the upper end of the flexible substrate 94, and extends to an end of the protrusion 98 of the flexible substrate 94. A conductor pattern of the protrusion 98 is connected to an external terminal (not shown).

The flexible substrate 94 is bent along the curved portions 92 and 93 of the magnetic cores 90 and 91. Thereafter, the flexible substrate 94 is wound around the magnetic cores 90 and 91 so that upper ends and lower ends of the conductor patterns 95 and 96 constituting the coil A and the coil B sequentially overlap. The overlapping points are electrically connected by soldering. In this manner, the conductor patterns 95 and 96 are formed as a series of coil.

Formation of a coil according to such a method allows coil conductors to be readily formed at the curved portions 92 and 93 of the magnetic core 90 and 91. When the coil conductors are formed at the curved portions 92 and 93, advantages similar to those obtained when the length of the coil is increased can be obtained, and the sensitivity of the antenna improves.

Although three notches 97a, 97b, and 97c are provided on the flexible substrate 94 in the antenna device 110, the notches are not necessarily provided. However, since the notch 97b located at the center of the flexible substrate 94 generates a space between the circuit substrate 1 and the flexible substrate 94 and allows other circuit components to be mounted, it is preferable to provide the notch. In addition, since the notches 97a and 97c provided between the conductor patterns 95 constituting the coil A and between the conductor patterns 96 constituting the coil B make winding of the flexible substrate 94 around the magnetic cores 90 and 91 easier, it is preferable to provide the notches.

As an embodiment of the present invention that is not described in any of the above-described embodiments, a coil portion A and a coil portion B can be connected using a substrate different from a circuit substrate 1 in the fifth embodiment shown in Fig. 6. In this case, both of a coil conductor serving as the coil portion A and a coil conductor serving as the coil portion B is formed on a flexible substrate having the above-described coil conductors thereon. Furthermore, a connecting conductor for connecting these coils may be formed on the flexible substrate.

## Claims

1. An antenna device comprising:
an antenna coil including a magnetic core (60) that has a first principal surface and a second principal surface facing the first principal surface and that has a curved portion (61, 62) at at least one end of the magnetic core (60), and a planar coil (70) formed on the first principal surface of the magnetic core (60), a coil axis of the coil (70) being vertical to the first principal surface, and an opening (63) being disposed at the center of the coil (70); and
a circuit substrate (1), wherein
the antenna coil is arranged to radiate magnetic flux;
the at least one end of the magnetic core (60) is located outside of the circuit substrate (1) in plan view and is bent toward the side of the circuit substrate (1);
the antenna coil is mounted on the circuit substrate (1) so that the second principal surface of the magnetic core (60) faces a mounting surface of the circuit substrate (1).

2. An antenna device comprising:
an antenna coil including a magnetic core (2; 40, 41) having a curved portion (20 - 27) at at least one end of the magnetic core (2; 40, 41), and a coil (4, 5; 84, 85) that is wound around the magnetic core (2; 40, 41) and that is constituted by a first coil portion (A) and a second coil portion (B) connected with each other and arranged apart from one another by a predetermined interval and a non-coil portion (3) is formed therebetween; and
a circuit substrate (1), wherein
the antenna coil is arranged to radiate magnetic flux;
the at least one end of the magnetic core (2; 40, 41) is located outside of the circuit substrate (1) in plan view and is bent toward the side of the circuit substrate (1);
the curved portion (20 - 27) is formed at an end of the magnetic core (2; 40, 41) located in a direction of the coil axis of the coil (4, 5; 84, 85), and wherein
the antenna coil is mounted on the circuit substrate (1) so that the coil axis is in parallel to a principal surface of the circuit substrate (1).

3. The antenna device according to Claim 2, wherein a flexible substrate (80; 94) having an electrode pattern formed thereon is wound around the magnetic core (2) to constitute the coil.

4. The antenna device according to any one of Claims 2 or 3, wherein the antenna coil has an electrode film (68), which is insulated from the coil, on a surface of the magnetic core that faces the circuit substrate.

5. The antenna device according to any one of Claims 2 to 4, wherein the first coil portion (A) and the second coil portion (B) are wound around different magnetic cores, and coil axes of the first coil portion (A) and the second coil portion (B) are common.

6. The antenna device according to any one of Claims 2 to 5, wherein the first coil portion (A) and the second coil portion (B) are wound around different magnetic cores (40, 41), and coil axes of the first coil potion (A) and the second coil portion (B) are shifted within a range that at least part of a coil section of the first coil portion (A) and a coil section of the second coil portion (B) that are projected onto a given plane vertical to the coil axes overlap.

7. The antenna device according to any one of Claims 2 to 6, wherein the first coil portion (A) and the second coil portion (B) are connected by an electrode pattern (30; 31; 32) formed on the circuit substrate.

8. The antenna device according to any one of Claims 2 to 7, wherein the first coil portion (A) and the second coil portion (B) are connected by an electrode pattern formed on a substrate different from the circuit substrate (1).

9. The antenna device according to any one of Claims 2 to 8, wherein the first coil portion (A) and the second coil portion (B) are connected so that an electromotive force is not caused by common magnetic fluxes that penetrate in a direction of the coil axis.

10. The antenna device according to Claim 9, wherein coil winding directions of the first coil portion (A) and the second coil portion (B) around the coil axis differ from one another.

11. The antenna device according to one of Claims 2 to 10, wherein the curved portion is disposed in a direction along a lateral face of the circuit substrate (1).

12. The antenna device according to any one of Claims 1 to 11, wherein the antenna coil is mounted on the circuit substrate (1) with an interval therebetween.

## Patentansprüche

1. Eine Antennenvorrichtung, die folgende Merkmale aufweist:
eine Antennenspule, die einen Magnetkern (60) umfasst, der eine erste Hauptoberfläche und eine zweite Hauptoberfläche aufweist, die der ersten Hauptoberfläche zugewandt ist, und die einen gekrümmten Abschnitt (21, 62) an zumindest einem Ende des Magnetkerns (60) aufweist, und eine planare Spule (70), die auf der ersten Hauptoberfläche des Magnetkerns (60) gebildet ist, wobei eine Spulenachse der Spule (70) vertikal zu der ersten Hauptoberfläche ist, und eine Öffnung (63) in der Mitte der Spule (70) angeordnet ist; und
ein Schaltungssubstrat (1), bei dem
die Antennenspule angeordnet ist, um Magnetfluss auszustrahlen;
das zumindest eine Ende des Magnetkerns (60) in der Draufsicht außerhalb des Schaltungssubstrats (1) angeordnet ist, und zu der Seite des Schaltungssubstrats (1) hin gebogen ist;
die Antennenspule auf dem Schaltungssubstrat (1) befestigt ist, so dass die zweite Hauptoberfläche des Magnetkerns (60) einer Befestigungsoberfläche des Schaltungssubstrats (1) zugewandt ist.

2. Eine Antennenvorrichtung, die folgende Merkmale aufweist:
eine Antennenspule, die einen Magnetkern (2; 40, 41) umfasst, der einen gekrümmten Abschnitt (20 - 27) an zumindest einem Ende des Magnetkerns (2; 40, 41) aufweist, und eine Spule (4, 5; 84, 85), die um den Magnetkern (2; 40, 41) gewickelt ist und die aus einem ersten Spulenabschnitt (A) und einem zweiten Spulenabschnitt (B) besteht, die miteinander verbunden sind, und um einen vorbestimmten Abstand getrennt voneinander angeordnet sind, und ein Nicht-Spulenabschnitt (3) ist zwischen denselben gebildet; und
ein Schaltungssubstrat (1), bei dem
die Antennenspule angeordnet ist, um Magnetfluss auszustrahlen;
das zumindest eine Ende des Magnetkerns (2; 40, 41) in der Draufsicht außerhalb des Schaltungssubstrats (1) angeordnet ist und zu der Seite des Schaltungssubstrats (1) hin gebogen ist;
der gekrümmte Abschnitt (20-27) an einem Ende des Magnetkerns (2; 40, 41) gebildet ist, das in einer Richtung der Spulenachse der Spule (4, 5; 84, 85) angeordnet ist, und wobei
die Antennenspule auf dem Schaltungssubstrat (1) befestigt ist, so dass die Spulenachse parallel zu einer Hauptoberfläche des Schaltungssubstrats (1) ist.

3. Die Antennenvorrichtung gemäß Anspruch 2, bei der ein flexibles Substrat (80; 94) mit einer darauf gebildeten Elektrodenstruktur um den Magnetkern (2) gewickelt ist, um die Spule zu bilden.

4. Die Antennenvorrichtung gemäß einem der Ansprüche 2 oder 3, bei der die Antennenspule einen Elektrodenfilm (68), der von der Spule isoliert ist, auf einer Oberfläche des Magnetkerns aufweist, die dem Schaltungssubstrat zugewandt ist.

5. Die Antennenvorrichtung gemäß einem der Ansprüche 2 bis 4, bei der der erste Spulenabschnitt (A) und der zweite Spulenabschnitt (B) um unterschiedliche Magnetkerne gewickelt sind, und Spulenachsen des ersten Spulenabschnitts (A) und des zweiten Spulenabschnitts (B) gemeinsam sind.

6. Die Antennenvorrichtung gemäß einem der Ansprüche 2 bis 5, bei der der erste Spulenabschnitt (A) und der zweite Spulenabschnitt (B) um unterschiedliche Magnetkerne (40, 41) gewickelt sind, und Spulenachsen des ersten Spulenabschnitts (A) und des zweiten Spulenabschnitts (B) innerhalb eines Bereichs verschoben sind, den zumindest ein Teil eines Spulensegments des ersten Spulenabschnitts (A) und eines Spulensegments des zweiten Spulenabschnitts (B), die auf eine bestimmte Ebene vertikal zu der Spulenachse vorstehen, überlappen.

7. Die Antennenvorrichtung gemäß einem der Ansprüche 2 bis 6, bei der der erste Spulenabschnitt (A) und der zweite Spulenabschnitt (B) durch eine Elektrodenstruktur (30; 31; 32) verbunden sind, die auf dem Schaltungssubstrat gebildet ist.

8. Die Antennenvorrichtung gemäß einem der Ansprüche 2 bis 7, bei der der erste Spulenabschnitt (A) und der zweite Spulenabschnitt (B) durch eine Elektrodenstruktur verbunden sind, die auf einem Substrat gebildet ist, das sich von dem Schaltungssubstrat (1) unterscheidet.

9. Die Antennenvorrichtung gemäß einem der Ansprüche 2 bis 8, bei der der erste Spulenabschnitt (A) und der zweite Spulenabschnitt (B) verbunden sind, so dass eine elektromotorische Kraft nicht durch gemeinsame Magnetflüsse erzeugt wird, die in einer Richtung der Spulenachse eindringen.

10. Die Antennenvorrichtung gemäß Anspruch 9, bei der sich Spulenwickelrichtungen des ersten Spulenabschnitts (A) und des zweiten Spulenabschnitts (B) um die Spulenachse herum voneinander unterscheiden.

11. Die Antennenvorrichtung gemäß einem der Ansprüche 2 bis 10, bei der der gekrümmte Abschnitt in einer Richtung entlang einer Seitenfläche des Schaltungssubstrats (1) angeordnet ist.

12. Die Antennenvorrichtung gemäß einem der Ansprüche 1 bis 11, bei der die Antennenspule auf dem Schaltungssubstrat (1) befestigt ist, mit einem Abstand zwischen denselben.

## Revendications

1. Dispositif d'antenne comportant :
une bobine d'antenne comprenant un noyau magnétique (60) qui possède une première surface principale et une seconde surface principale faisant face à la première surface principale et qui possède une partie incurvée (61, 62) à au moins une extrémité du noyau magnétique (60), et une bobine plane (70) formée sur la première surface principale du noyau magnétique (60), un axe de bobine de la bobine (70) étant vertical par rapport à la première surface principale, et une ouverture (63) étant disposée au centre de la bobine (70) ; et
un substrat de circuit (1), dans lequel
la bobine d'antenne est disposée pour rayonner un flux magnétique ;
la au moins une extrémité du noyau magnétique (60) est située à l'extérieur du substrat de circuit (1) vu de dessus et est courbée vers le côté du substrat de circuit (1) ;
la bobine d'antenne est montée sur le substrat de circuit (1) de sorte que la seconde surface principale du noyau magnétique (60) se trouve en vis-à-vis d'une surface de montage du substrat de circuit (1).

2. Dispositif d'antenne comportant :
une bobine d'antenne comprenant un noyau magnétique (2 ; 40, 41) possédant une partie incurvée (20-27) à au moins une extrémité du noyau magnétique (2 ; 40, 41), et une bobine (4, 5 ; 84, 85) qui est enroulée autour du noyau magnétique (2 ; 40, 41) et qui est constituée par une première partie de bobine (A) et une seconde partie de bobine (B) reliées l'une à l'autre et disposées écartées l'une de l'autre d'un intervalle prédéterminé et une partie de non bobine (3) est formé entre elles ; et
un substrat de circuit (1), dans lequel
la bobine d'antenne est disposée pour rayonner un flux magnétique ;
la au moins une extrémité du noyau magnétique (2; 40, 41) est située à l'extérieur du substrat de circuit (1) vu de dessus et est courbée vers le côté du substrat de circuit (1) ;
la partie courbée (20-27) est formée à une extrémité du noyau magnétique (2 ; 40, 41) située dans une direction de l'axe de bobine de la bobine (4, 5 ; 84, 85), et dans lequel
la bobine d'antenne est montée sur le substrat de circuit (1) de sorte que l'axe de bobine est parallèle à une surface principale du substrat de circuit (1).

3. Dispositif d'antenne selon la revendication 2, dans lequel un substrat flexible (80 ; 94) possédant un motif d'électrode formé sur sa surface est enroulé autour du noyau magnétique (2) pour constituer la bobine.

4. Dispositif d'antenne selon l'une quelconque des revendications 2 ou 3, dans lequel la bobine d'antenne possède un film d'électrode (68), qui est isolé de la bobine, sur une surface du noyau magnétique qui se trouve en vis-à-vis du substrat de circuit.

5. Dispositif d'antenne selon l'une quelconque des revendications 2 à 4, dans lequel la première partie de bobine (A) et la seconde partie de bobine (B) sont enroulées autour de différents noyaux magnétiques, et les axes de bobine de la première partie de bobine (A) et de la seconde partie de bobine (B) sont communs.

6. Dispositif d'antenne selon l'une quelconque des revendications 2 à 5, dans lequel la première partie de bobine (A) et la seconde partie de bobine (B) sont enroulées autour de différents noyaux magnétiques (40, 41), et les axes de bobine de la première partie de bobine (A) et de la seconde partie de bobine (B) sont décalés à l'intérieur d'une plage de cette au moins partie d'une section de bobine de la première partie de bobine (A) et d'une section de bobine de la seconde partie de bobine (B) qui font saillie sur un plan donné vertical par rapport au chevauchement des axes de bobine.

7. Dispositif d'antenne selon l'une quelconque des revendications 2 à 6, dans lequel la première partie de bobine (A) et la seconde partie de bobine (B) sont reliées par un motif d'électrode (30 ; 31 ; 32) formé sur le substrat de circuit.

8. Dispositif d'antenne selon l'une quelconque des revendications 2 à 7, dans lequel la première partie de bobine (A) et la seconde partie de bobine (B) sont reliées par un motif d'électrode formé sur un substrat différent du substrat de circuit (1).

9. Dispositif d'antenne selon l'une quelconque des revendications 2 à 8, dans laquelle la première partie de bobine (A) et la seconde partie de bobine (B) sont reliées de sorte qu'une force électromotrice n'est pas provoquée par des flux magnétiques communs qui pénètrent en direction de l'axe de bobine.

10. Dispositif d'antenne selon la revendication 9, dans lequel les directions d'enroulement de bobine de la première partie de bobine (A) et de la seconde partie de bobine (B) autour de l'axe de bobine diffèrent l'une de l'autre.

11. Dispositif d'antenne selon l'une des revendications 2 à 10, dans lequel la partie courbée est disposée dans une direction le long d'une face latérale du substrat de circuit (1).

12. Dispositif d'antenne selon l'une quelconque des revendications 1 à 11, dans lequel la bobine d'antenne est montée sur le substrat de circuit (1) avec un intervalle entre eux.
